# EUROPEAN PATENT APPLICATION

(11) **EP 0 831 651 A1**
(43) Date of publication of application: **25.03.1998**
(21) Application number: 96115232.9
(22) Date of filing: 23.09.1996
(51) Int. Cl.: H04N 7/088

(54) **Method for displaying teletext data**

(71) Applicant: Siemens Components Pte Ltd, Singapore 349249 (SG)
(72) Inventor: Hajimusa, Imran, c/o Siemens Components Pte Ltd., Singapore 34 92 49 (SG)
(74) Representative: Fuchs, Franz-Josef, Dr.-Ing.

(57) **Abstract**

A method for displaying teletext data comprises memorizing a received teletext page in a memory having a capacity of a number of rows equal to the transmitted character rows. A page selection menu is memorized in at least one of the rows of the display memory with automatic pop on and pop off so that the row previously occupied by the menu text is replaced by teletext page information. The method is apted for Chinese teletext standard, is memory economical and compatible with teletext processor architectures for European standard teletext.

## Description

The invention relates to a method for displaying teletext data and page selection information.

The teletext page format for European teletext standards comprises a header line in row 0, the teletext data to be displayed in row 1 to 23 as well as additional status and control information in row 24. The teletext page comprises 25 rows alltogether. Each row of a teletext page corresponds to a row of display characters to be displayed at a television screen. The control information may comprise page selection information for a FLOF-teletext menu (FLOF: Full level one features). The FLOF information contains the page numbers of context related pages. The links to the FLOF pages are transmitted in pseudo paket no. 27. A FLOF generated text is usually displayed in the last row of the teletext picture on the television screen. The user may choose one of the displayed text items to have the corresponding page captured and displayed on the screen.

According to another method for facilitating the search of a special teletext page, page numbers of all available pages are collected and a selection of available page numbers is displayed in the last row of the teletext picture, so called page trace. Another page selection display is known as TOP-(table of pages)-teletext, where the available page numbers are broadcast in a special teletext page.

For displaying a teletext page including the page selection information the teletext decoder comprises a memory having the capacity of 25 teletext display character rows, i.e. the header row 0 and the teletext rows 1...23 and the page selection information in row 24. A display row has a adequate hight to show one full Latin character or Arabic numeral.

The Chinese teletext standard differs from European teletext standards in that a Chinese letter character has the size of 6 characters of European standards. A Chinese character comprises 2 characters in horizontal direction and 3 characters in vertical direction and hence is spread over 3 display rows. In contrast, a Chinese character is broadcast as coded data in only one broadcast row. Transmitting 8 lines of Chinese characters means that an area of 25 (European standards) display lines is occupied.

When using an architecture of a teletext processor originally designed for European teletext standards comprising a display memory for 25 character rows, there is no memory available in the display memory for the page selection information representing FLOF, TOP or page trace displays. In order to overcome this disadvantage the display memory could be enhanced. However, the already available chip architecture would have to be modified. As an alternative, the page selection information could be memorized for display in an additional memory. However, this sacrifices memory capacity for page acquisition. The average capturing time for a page would be delayed. This is even more adverse when the memory is divided into blocks wherein each block can only be dedicated to a certain function. Then, the memory block used for the additional row or rows of page selection information would not be available for page acquisition what is not memory economical.

The object of the invention is to provide a method for displaying teletext data comprising page selection information that is compatible with existing hardware architectures.

To achieve this object a method for displaying teletext data is provided according to the features of claim 1.

The invention provides an automatic pop on/pop off-menu display that is compatible with a display memory used for European teletext standards. According to a preferred embodiment of the invention the page selection menu pops up automatically when the display page changes. This makes the user aware of that available feature. Having popped up for a predetermined amount of time the page selection display pops off an shows the full received teletext page. The solution is memory economical, since no further memory capacity is necessary.

Details and advantages of the invention will become apparent from the embodiment of the invention directed to Chinese teletext as described below.

In Chinese teletext, the Chinese characters comprise 6 characters according to WST-standard (WST: Word System Teletext). A Chinese character comprises 2 WST-characters in horizontal direction and 3 WST-characters in vertical direction. The Chinese teletext page is comprised of 25 rows of WST-characters on the display. Therefore the data packet no. 22 of a teletext page is displayed in display rows 22, 23, and 24. The Chinese characters are broadcast and received in the television receiver as coded data. The coded data in packet no. 22 is decoded and the character display information is stored in a display memory. The display memory is read in order to provide the display information to a cathode ray tube. The memory has the capacity of 25 WST-character rows. Therefore, there is no free memory in the display memory to memorize any further page selection information in form of a user operated menu.

According to the invention the page selection information is provided as pop up/pop off menu. During pop up the menu is written in form of Latin characters/arabic numerals in row 24 of the display menu or in rows 22 to 24 in form of Chinese characters. During a predetermined amount of time the menu is displayed on the television screen in row 24 and 22 to 24, respectively. The display time intervall is measured by a display counter counting from a preset value to 0. The pop up status is indicated by a special bit in status register. The pop up status may be activated by a user through a toggle key on a remote control device. According to Chinese teletext there is broadcast page selection information that is displayed in form of a menu showing a FLOF-display. When the television station does not support the FLOF-feature a page trace menu is presented. Page trace means that the page numbers of all available pages are collected and a reasonable selection of page numbers is provided for user selection in the menu. The FLOF-menu is displayed in Chinese letter characters, whereas the page trace menu is displayed in Latin characters/Arabic numerals. The pop up menu is superimposed on the teletext page to be displayed in display row 24 and 22 to 24, respectively. When the menu pops off, the corresponding display rows in the display memory are updated with the respective display rows of the teletext page to be displayed. These rows are still available in coded form in the acquisition memory as they have been received in the television signal.

When a new teletext page is captured and displayed on the television screen the page selection menu for FLOF or page trace is popped up automatically to make the user aware that this user feature is available. When the user menu is being displayed and a new teletext page is captured, then only the upper display rows, i.e. rows 1...21, are updated with the new teletext page. The reminder of the page, i.e. rows 22...24, is updated when the user menu pops off.

In the accompanying drawings:
- figure 1 (a) to (c): show a teletext display according to Chinese teletext standard without any user menu, a page trace menu, or a FLOF-menu, respectively, and
- figure 2: shows a flow chart embodying the invention.

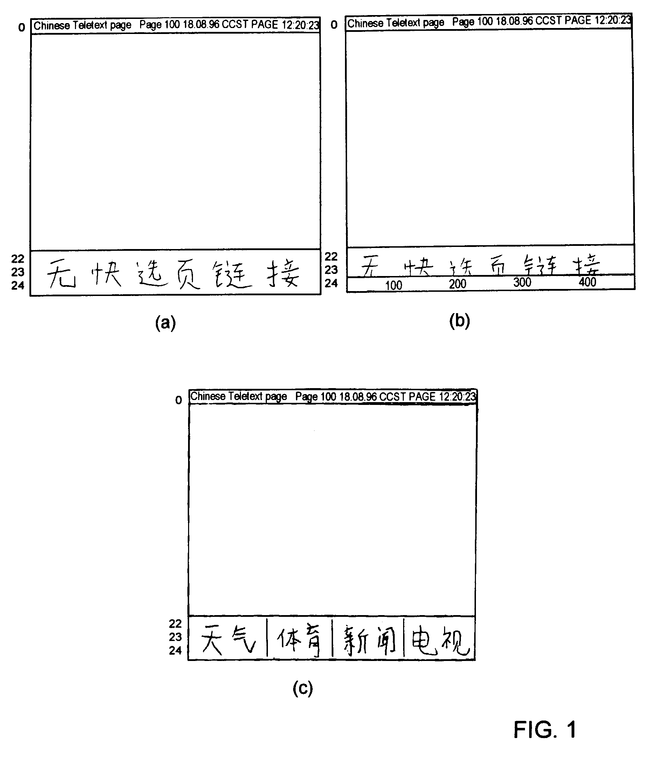

The normal page teletext display for teletext page 100 in figure 1 (a) comprises a headerline in row 0 an in the rest of the page the normal teletext information broadcast by a transmitting station. Especially, rows 22 to 24 show Chinese letter characters transmitted as coded data in packet 22 of teletext page 100.

Figure 1 (b) shows the same page with a page trace menu superimposed on row 24 of the original teletext page display. Row 24 comprises page numbers 100, 200, 300, and 400. One of these page numbers may be selected by the user through special keys on a remote control device. The page numbers presented in row 24 are a selection of all page numbers available in the transmission cycle of the transmitting station. The page numbers are selected on the bases of the likelihood, by which the user would proceed starting from the currently displayed page 100.

Figure 1 (c) shows page 100 with a FLOF-display in lines 22 to 24. The FLOF display text is different from the original display of figure 1 (a). The FLOF display menu shows text items that are related to page numbers. A user may select the corresponding page by pointing on one of the text items through special keys on the remote control.

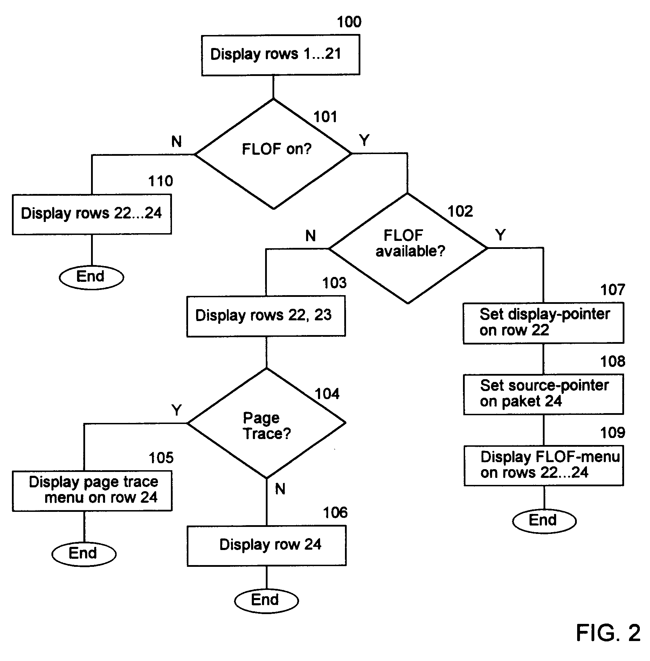

The flow chart in figure 2 shows the basic steps of operation for displaying a page with a page trace menu or a FLOF pop up menu. At reference numeral 100 display rows 1 to 21 are displayed on the television screen. At 101, the teletext processor checks whether the user has activated FLOF or not as is indicated by a FLOF bit indicator. If FLOF has not been activated by the user the display rows 22 to 24 are displayed at 110. At that point the teletext page has been displayed as broadcast by the television station. This results in a display as shown in figure 1(a).

When user selects the FLOF function the teletext processor follows the YES-branch of the diagram. It is checked at 102 whether the broadcasting station sends FLOF control information or not. When FLOF information is not available, rows 22 and 23 are displayed at 103 as transmitted from the station. Then it is checked at 104 whether page trace has been enabled by the user or not. If yes, the menu is displayed on row 24 at 105. The resulting screen display is shown in figure 1 (b). When page trace is not activated by the user, row 24 is displayed as transmitted at 106. This results in an screen display as shown in figure 1 (a). When it is found at 102 that the FLOF information is transmitted by the broadcasting station, a display pointer is set on row 22 at 107. At 108, the source pointer for evaluating the transmitted teletext information is set on teletext packet no. 24 of the teletext page which contains the FLOF information. The FLOF display menu is generated and displayed on display rows 22, 23, and 24 at 109. This results in the screen display shown in figure 1 (c). Displaying of a row also means that the display data is memorized in the display memory of the teletext processor. The menu rows remain displayed at 105 and 109 until the predetermined time has been reached and the menu pops off. Then rows 24 and 22 to 24 are updated with the respective lines 24 or 22 to 24 belonging to the received teletext page.

In summary, a method for displaying teletext data comprises memorizing a received teletext page in a memory having a capacity of a number of rows equal to the transmitted character rows. A page selection menu is memorized in at least one of the rows of the display memory with automatic pop off so that the row previously occupied by the menu text is replaced by teletext page information. The method is apted for Chinese teletext standard, is memory economical and compatible with teletext processor architectures for European standard teletext.

## Claims

1. Method for displaying teletext data comprising the steps of: receiving one teletext page, the page being converted to a number of rows of display characters, memorizing the received page in a memory having a capacity of said number of rows of display characters, displaying said rows contained in said memory through a display device, memorizing in said memory at least one row of characters representing a page selection information, displaying the page selection information characters on said display device for a predetermined amount of time and after said predetermined amount of time updating said at least one row in said memory and on said display device with the corresponding row of characters received for the teletext page to be displayed.

2. Method according to claim 1,
**characterized in that**
when a new teletext page is received and displayed, the memorizing and the display of said page selection information characters is performed for said predetermined amount of time.

3. Method according to claim 1 or 2,
**characterized in that**
the received teletext page comprises pakets of data, each paket being converted to a number of N rows of display characters, the number of rows comprising said page selection information characters being M with M less than N, the N - M rows of display characters adjacent to said page selection information characters being prevented form updating with rows generated from a page that is received during the predetermined time interval and being updated after said predetermined time interval has elapsed.

4. Method according to claim 3,
**characterized in that**
the teletext page to be displayed contains Chinese characters, each Chinese character comprising six display characters with two display characters being displayed adjacently in horizontal direction and three display characters being displayed adjacently in vertical direction in three rows of display characters.

5. Method according to any of the preceeding claims,
**characterized in that**
the page selection information characters comprises page numbers or text items related to page numbers, one of the page numbers and the text items, respectively, being operable upon for a page request by a user input through an input device.
